# EUROPEAN PATENT APPLICATION

(11) **EP 1 791 264 A1**
(43) Date of publication of application: **30.05.2007**
(21) Application number: 05781332.1
(22) Date of filing: 01.09.2005
(51) Int. Cl.: H04B 1/16, H04N 5/445, H04Q 7/38, H04M 1/00, H04N 17/00, H04Q 7/34, H04B 7/26

(54) **MOBILE TERMINAL APPARATUS**

(30) Priority: 01.09.2004 JP 2004253941
(71) Applicant: MATSUSHITA ELECTRIC INDUSTRIAL CO., LTD., Osaka 571-8501 (JP)
(72) Inventor: MATSUURA, Iwao, Matsushita Electric Ind. Co.,Ltd., Shiromi 1-chome,Chuo-Ku, Osaka 540-6319 (JP); YASUNO, J., Matsushita Electric Ind. Co.,Ltd., Shiromi 1-chome,Chuo-Ku, Osaka 540-6319 (JP); MIYASHITA, A., Matsushita Electric Ind. Co.,Ltd., Shiromi 1-chome,Chuo-Ku, Osaka 540-6319 (JP)
(74) Representative: Grünecker, Kinkeldey, Stockmair & Schwanhäusser Anwaltssozietät
(86) International application number: PCT/JP2005/016014
(87) International publication number: WO 2006/025491

(57) **Abstract**

The present invention has an obj ect to provide a portable terminal apparatus capable of quantitatively and easily confirming reception conditions of broadcast electromagnetic waves which are transmitted from broadcasting stations.

A portable terminal apparatus 1 of the present invention corresponds to a portable terminal apparatus 1 capable of receiving broadcast, which is provided with a television broadcast receiving unit 7 for receiving a broadcast electromagnetic wave transmitted from a broadcasting station; an electric field strength detecting unit 12 for detecting an electric field strength of the electromagnetic wave; and a display unit 8 for displaying information. In the portable terminal apparatus 1, the electric field strength detecting unit 12 detects an electric field strength of the broadcast electromagnetic wave, and the display unit 8 displays the detected electric field strength of the broadcast electromagnetic wave.

## Description

### <Technical Field>

The present invention is related to a portable terminal apparatus having a broadcast receiving function such as a television, or a radio.

### <Background Art>

Among conventional portable terminal apparatus, there are some portable terminal apparatus equipped with broadcast receiving functions capable of receiving television broadcast programs and radio broadcast programs, which are transmitted from broadcasting stations. In accordance with these portable terminal apparatus equipped with the broadcast receiving functions, present positional information as to the own portable terminal apparatus is acquired, broadcast channels receivable at the present position are specified, and frequencies are tuned to the specified broadcast channels so as to receive broadcast programs. As a result, everywhere present positions of these portable terminal apparatus are located, these portable terminal apparatus can receive broadcast programs as to areas including the present positions (refer to patent publications 1 and 2).
Patent publication 1: JP-A-8-162909
Patent publication 2: JP-A-2003-309774

### <Disclosure of the Invention>

### <Problems that the Invention is to Solve>

However, there is no way except that the conventional portable terminal apparatus equipped with the broadcast receiving functions judge reception conditions of broadcast channel electromagnetic waves which can be received at the present positions of these portable terminal apparatus by receiving noise contained in the received broadcast electromagnetic waves. Accordingly, the portable terminal apparatus can hardly judge the electromagnetic wave receiving conditions in a quantitative manner. Also, the broadcast electromagnetic waves are received in order to confirm the electromagnetic wave receiving conditions of the broadcast channels, which may cause cumbersome operations to be given to listeners.

The present invention has been made to solve the above-describedproblem, and therefore, has an object to provide a portable terminal apparatus capable of quantitatively and easily confirming reception conditions of broadcast electromagnetic waves which are transmitted from broadcasting stations.

### <Means for Solving the Problems>

A portable terminal apparatus of the present invention is featured by such a portable terminal apparatus capable of receiving a broadcasting program, comprising: broadcast receiving means for receiving a broadcast electromagnetic wave transmitted from a broadcasting station; electric field strength detecting means for detecting an electric field strength of an electromagnetic wave; and display means for displaying information; in which the electric field strength detecting means detects an electric field strength of the broadcast electromagnetic wave; and the display means displays the detected electric field strength of the broadcast electromagnetic wave.

In accordance with this arrangement, the portable terminal apparatus displays the electric field strength value of the received broadcast electromagnetic wave, so that the user of the portable terminal apparatus can quantitatively and easily confirm an electromagnetic wave condition of the broadcast electromagnetic wave.

Also, the portable terminal apparatus of the present invention is comprised of: positional information acquiring means for acquiring positional information of the portable terminal apparatus: and channel specifying means for specifying a channel of a broadcasting station which can be received by the portable terminal apparatus with reference to the acquired positional information; in which the broadcast receiving means receives a broadcast electromagnetic wave of the specified channel of the broadcasting station.

In accordance with this arrangement, while the broadcast channels receivable at a present position of the portable terminal apparatus are specified, and the frequencies are tuned to the specified broadcast channels so as to receive the broadcast programs. As a result, everywhere the present position of the portable terminal apparatus is located, this portable terminal apparatus can receive broadcast programs as to the areas including the present position.

Also, the portable terminal apparatus of the present invention is comprised of the displaymeans which displays both the acquired positional information and the electric field strength of the broadcast electromagnetic wave detected for every channel of the specified broadcasting station at the same time.

In accordance with this arrangement, since the electric field strength of the broadcast electromagnetic wave is displayed with respect to each of the channels of the broadcasting stations which can be received at the present position of the portable terminal apparatus, the electromagnetic wave conditions of all of the broadcast channels which are receivable at the present position of the portable terminal can be immediately confirmed.

Also, the portable terminal apparatus of the present invention is comprised of the display means which displays the electric field strength of the detected broadcast electromagnetic wave in a multiple stage.

In accordance with this arrangement, the user of the portable terminal apparatus can immediately confirm the electromagnetic wave condition of the broadcast electromagnetic wave.

Also, the portable terminal apparatus of the present invention is comprised of the display means which displays that when the broadcast electromagnetic wave is detected, the detected area is a service area of the broadcast.

In accordance with this arrangement, the user of the portable terminal apparatus can immediately confirm that the broadcast electromagnetic wave is received.

Also, the portable terminal apparatus of the present invention is comprised of wireless communicating means for communicating in a wireless manner.

In accordance with this arrangement, the user of the portable terminal apparatus can transmit and receive the information by utilizing the wireless electromagnetic waves.

Also, the portable terminal apparatus of the present invention is comprised of the display means which commonly uses an electric field strength indication of the broadcast electromagnetic wave, and an electric field strength indication of the wireless communicating means.

In accordance with this arrangement, since the indication portions are commonly used, the portable terminal apparatus can be made compact.

Also, the portable terminal apparatus of the present invention is comprised of the positional information acquiring means which acquires the positional information from a base station of the portable terminal apparatus by the wireless communicating means.

In accordance with the above-described arrangement, while the function for specifying the present position of the portable terminal apparatus is not provided in the portable terminal apparatus, the positional information can be simply acquired.

Also, the portable terminal apparatus of the present invention is comprised of the broadcast receiving means which receives at least a television broadcasting electromagnetic wave, or a radio broadcasting electromagnetic wave.

### <Advantage of the Invention>

In accordance with the portable terminal apparatus of the present invention, the reception conditions of the broadcast electromagnetic waves distributed from the broadcasting stations can be quantitatively and easily confirmed.

### <Brief Description of the Drawings>

Fig. 1 is a block diagram for indicating an arrangement of a portable telephone according to a first embodiment of the present invention.
Fig. 2 is an example of a television channel register cable of the first embodiment of the present invention.
Fig. 3 indicates an example of a television channel list screen of the first embodiment of the present invention.
Fig. 4 shows a display example of a display unit of the first embodiment of the present invention.
Fig. 5 is an illustration in which a broadcast electromagnetic mark is enlarged in accordance with the first embodiment of the present invention.
Fig. 6 is a flow chart for describing process operations executed in the case that a television broadcast program is received by the portable telephone of the first embodiment of the present invention.
Fig. 7 is a flow chart for explaining process operations for selecting a channel by the portable telephone of the first embodiment of the present invention.
Fig. 8 is a flow chart for explaining process operations for displaying a reception electric field level by the portable telephone of the first embodiment of the present invention.
Fig. 9 is a block diagram for indicating an arrangement of a portable telephone according to a second embodiment of the present invention.
Fig. 10 is an example of a radio frequency register table of the second embodiment of the present invention.
Fig. 11 is a diagram for representing an example as to a radio frequency list screen according to the second embodiment of the present invention.
Fig.12 is a flow chart for describing process operations executed in the case that a radio broadcast program is received by the portable telephone of the second embodiment of the present invention.
Fig. 13 is a flow chart for explaining process operations for selecting a frequency by the portable telephone of the second embodiment of the present invention.

### <Description of Reference Numerals and Signs>

- 1,100: portable telephone
- 2: CPU
- 3: input unit
- 4: portable antenna
- 5: wireless communication unit
- 6: television antenna
- 7: television broadcast receiving unit
- 8, 41: display unit
- 9: sound output unit
- 10: control program
- 11: television channel register table
- 12: ROM
- 13: RAM
- 21, 121: area code;
- 22: channel
- 23, 122: frequency
- 31: television channel list screen
- 32, 132: present position
- 33: television channel list
- 34, 43, 134: reception electric field level
- 42: television broadcast
- 43: electric field strength level of television broadcast
- 44: electric field strength level of wireless communication
- 51: broadcasting electromagnetic wave mark
- 52: broadcasting tower mark
- 53: antenna bar
- 106: radio antenna
- 107: radio broadcast receiving unit
- 111: radio frequency register table
- 131: radio frequency list screen

### <Best Mode for Carrying Out the Invention>

As embodiments of portable terminal apparatus according to the present invention, a portable telephone having a television broadcast receiving function will now be described in detail in a first embodiment, and another portable telephone having a radio broadcast receiving function will nowbe explained in detail in a second embodiment with reference to drawings.

### (FIRST EMBDOIMENT)

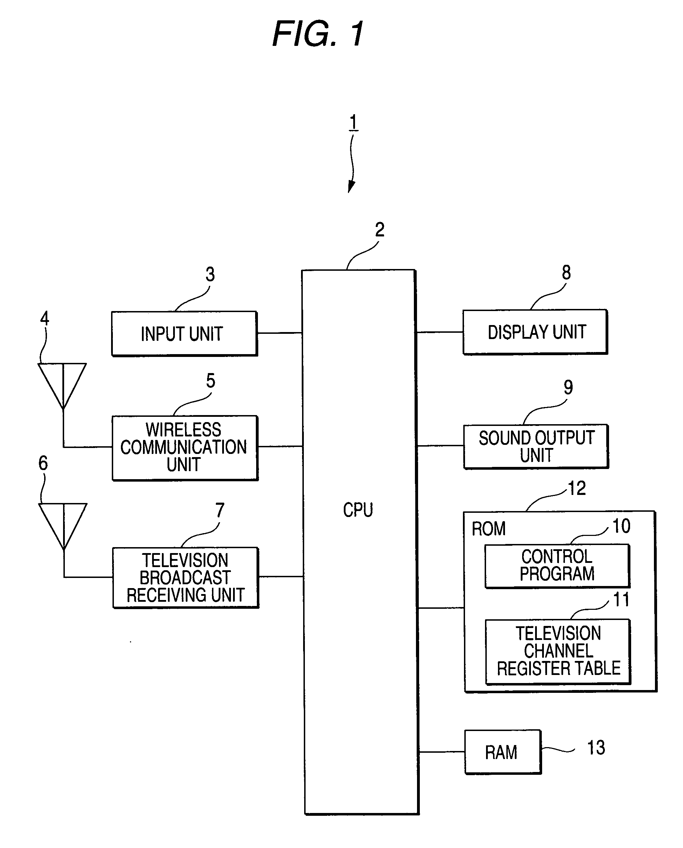

Fig. 1 is a block diagram for indicating an arrangement of a portable telephone according to the first embodiment of the present invention. The portable telephone 1 is arranged by containing a CPU 2, an input unit 3, a wireless communication unit 5, a television broadcast receiving unit 7, a display unit 8, a sound output unit 9, a ROM 12, and a RAM 13. The input unit 3 is constituted by a ten-numeral entry key, and various sorts of function keys, which are connected to the CPU 2. The wireless communication unit 5 is communicated with a mobile communication base station via a portable antenna 4 in a wireless manner. The television broadcast receiving unit 7 receives a television broadcast program from a television broadcasting station via a television antenna 6. The display unit 8 displays a received television broadcast program, a reception electric field level of the television broadcast program, and the like. The sound output unit 9 outputs sound of abroadcastprogram, and the like. The ROM12 stores thereinto a control program 10 which is executed by the CPU 2, a television channel register table 11, and the like. In the television channel register table 11, broadcasting stations receivable for every area code have been registered. The RAM 13 temporarily stores a program, data, and the like, which are read, if required.

The CPU 2 executes such a process operation that the control program 10 stored in the ROM 12 is read on the RAM 13 if required, a television broadcast is received in response to an operation from the input unit 3, and a reception electric field level of the television broadcast is displayed.

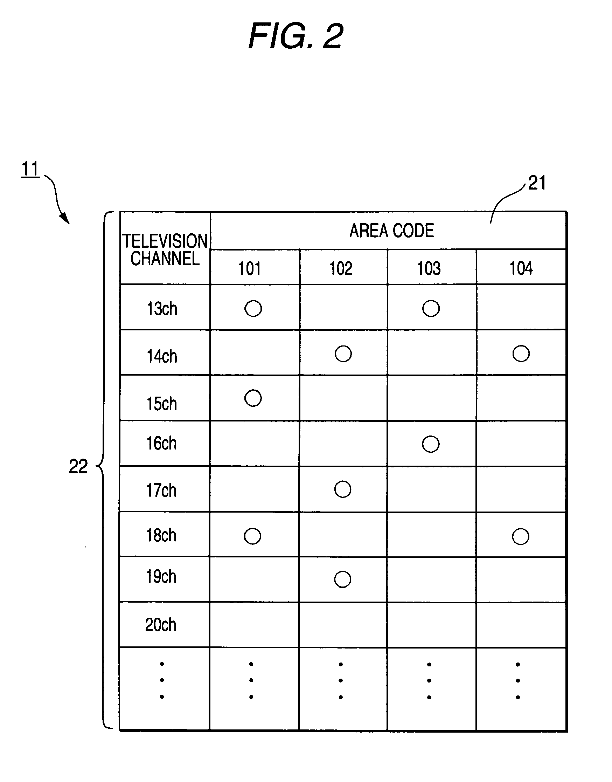

Fig. 2 represents an example as to a television channel register table of the first embodiment of the present invention. As shown in Fig. 2, a television channel register table 11 has registered channels 22 which are receivable for every area code 21. For example, while channels 22 [13ch], [15ch], and [18ch], which are receivable in an area code "101" have been registered, other channels which are not receivable in the area code "101" are not registered. The area codes 21 are received by the portable telephone 1 from base stations for performing wireless communications, and indicate positional information of present places of the portable telephone 1. A television channel list screen which will be described in the next paragraph and corresponds to the area codes 21 are formed from the television channel register table 11, and then, is displayed on the display unit 8.

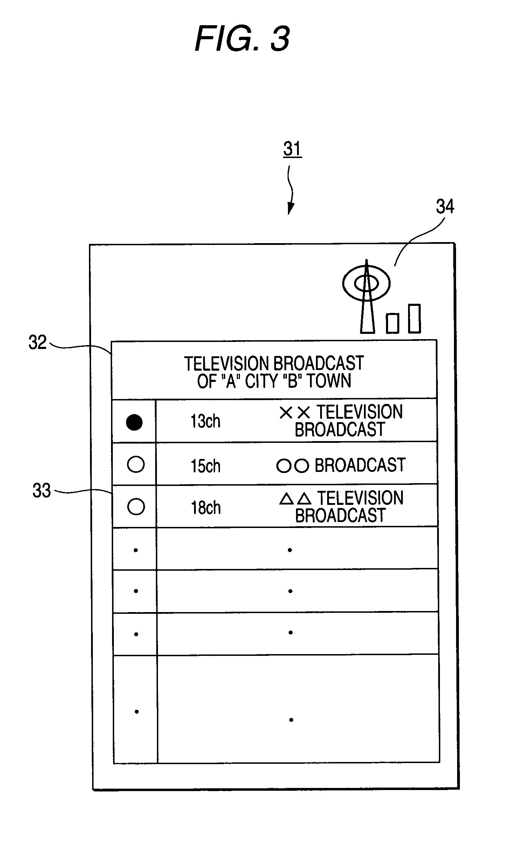

Fig. 3 indicates an example of the television channel list screen of the first embodiment of the present invention. As shown in Fig. 3, a present place 32, a television channel list table 33 receivable at the present place, a reception electric field level 34 of a television, and the like are displayed on the television channel list screen 31 which is displayed on the display unit 8. In the television channel list table 33, a reception electric field strength of a channel which is designated by, for example symbol, "●" is displayed in the reception electric field level 34 of the television. A television program which is broadcasted via a channel selected in the television channel list table 33 is displayed on the display unit 8, and sound is outputted from the sound output unit 9.

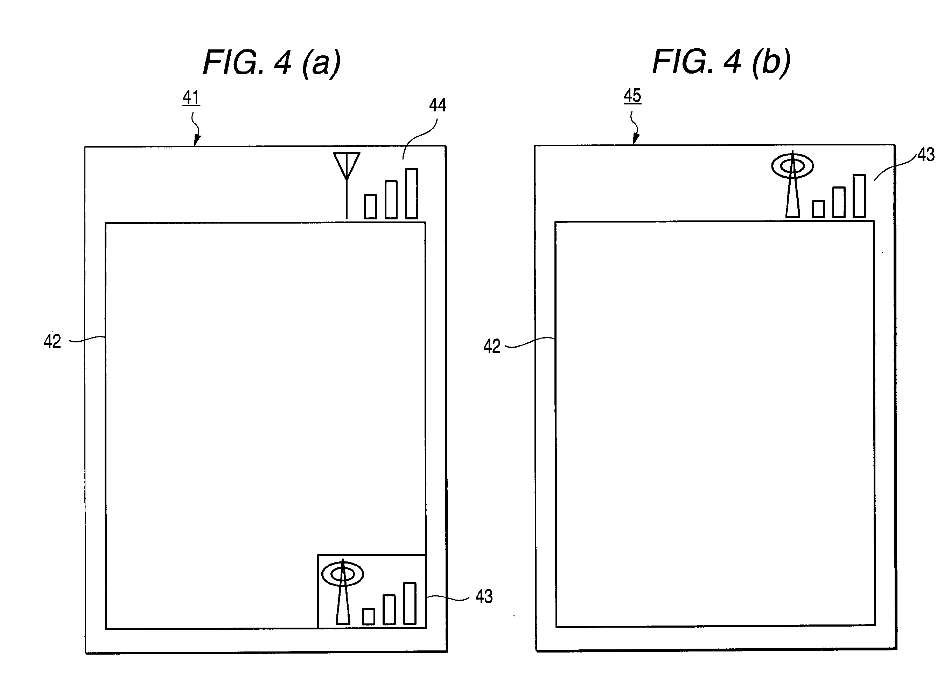

Fig. 4 indicates a display example as to the display unit of the first embodiment of the present invention. Fig. 4(a) is a first display example of the display unit, and Fig. 4(b) is a second display example of the display unit. On the display unit 41 of Fig. 4(a), a received television broadcast 42, a reception electric field level 43 of the television broadcast, a reception electric field level 44 of a wireless communication with a base station, and the like are displayed. The reception electric field level 43 of the television is provided at a corner of the received television broadcast 42 on the display unit 41. Since both the reception electric field level 43 of the television broadcast and the reception electric field level 44 of the wireless communication are displayed on the display unit 41, electromagnetic wave conditions of the television broadcast and electromagnetic wave conditions of the wireless communication can be grasped at the same time. On the display unit 45 of Fig. 4(b), the received television broadcast 42, the reception electric field level 43 of the television, and the like are displayed. The display unit 45 displays the reception electric field level 43 of the television broadcast by replacing the reception electric field level 44 of the wireless communication shown in Fig. 4(a) by this reception electric field level 43.

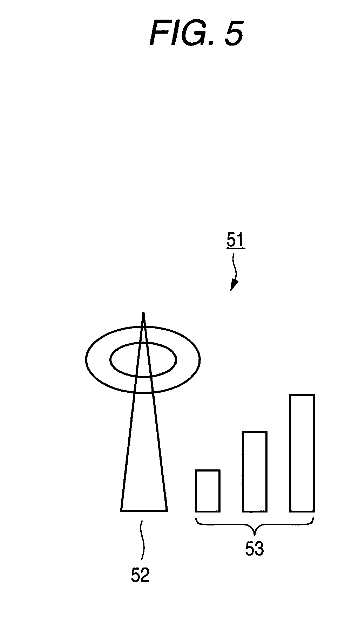

The reception electric field levels 34 and 43 of the television broadcast show a broadcasting electromagnetic wave mark. Fig. 5 shows an enlarged diagram of a broadcasting electromagnetic wave mark of the first embodiment of the present invention. The broadcasting electromagnetic mark 51 is constituted by a broadcasting tower mark 52, and three antenna bars 53 having different lengths from each other. The broadcasting tower mark 51 shows that a reception electric field level indicated by the antenna bars 53 corresponds to a level for a broadcasting electromagnetic wave, which can be discriminated from a level for a wireless communication electromagnetic wave. Also, since the broadcasting tower mark 52 is displayed, this mark 52 indicates a broadcasting service area.

Atechnical idea for indicating a reception electric field level by the three antenna bars 53 is known in this field. For instance, the reception electric field levels 34 and 43 of the television broadcast are indicated based upon high/low voltages of reception electric field strength signals (will be referred to as "RSSI signals" hereinafter) which indicate electric field strengths of received broadcast electromagnetic waves. When a voltage of an RSSI signal is high, three pieces of the antenna bars 53 are displayed so as to notify that an electric field strength is strong and a television broadcast can be obtained under better condition. When a voltage of an RSSI signal is medium, two pieces of the antenna bars 53 are displayed so as to notify that a reception electric field strength is approximately medium and a television broadcast can be obtained under substantially better condition. When a voltage of an RSSI signal is low, one piece of the antenna bar 53 is displayed so as to notify that a reception electric field strength is weak, and a television broadcast is bad. When a voltage of an RSSI signal is very low, the antenna bars 53 are not displayed in order to notify such a risk that while a reception electric field strength is very weak, a television broadcast may be disturbed and cut off. When a voltage of an RSSI signal can be hardly detected, "out of service area" is displayed so as to notify that a television broadcast cannot be received.

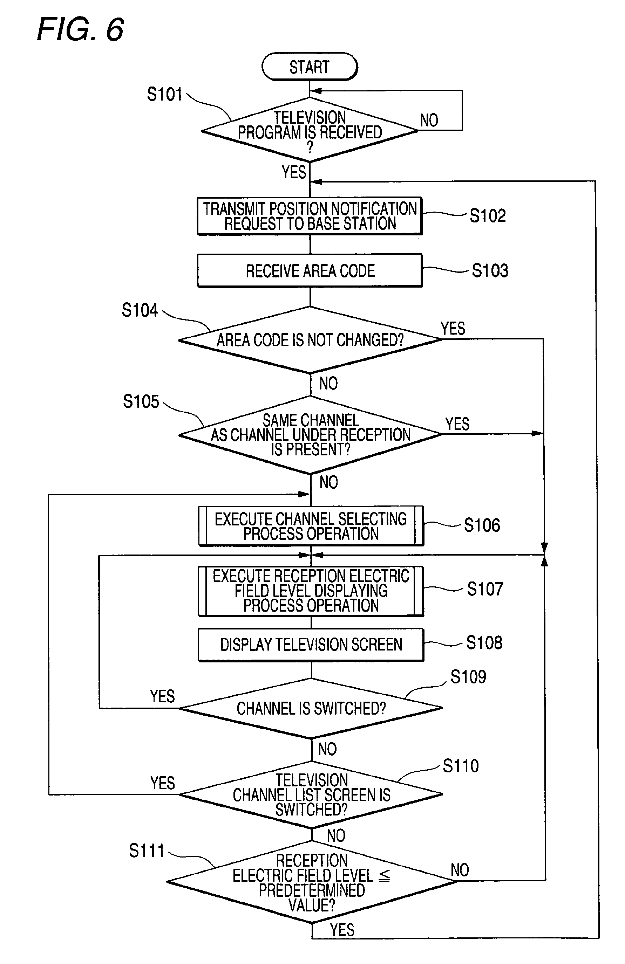

Process operations for receiving television broadcast by the portable telephone 1 arranged in the above-described manner will now be explained with reference to Fig. 6 to Fig. 8. Fig. 6 is a flow chart for explaining process operations executed when a television broadcast is received by the portable telephone 1 according to the first embodiment of the present invention. The process operations by the portable telephone 1 are controlled by that the CPU 2 executes the control program 10 shown in Fig. 1. As shown in Fig. 6, when a user of the portable telephone 1 requests a reception of television broadcast from the input unit 3 of the portable telephone 1 (S101; YES), the wireless communication unit 5 transmits a position notification request with respect to a base station (S102) so as to receive an area code of the present place from the base station (S103).

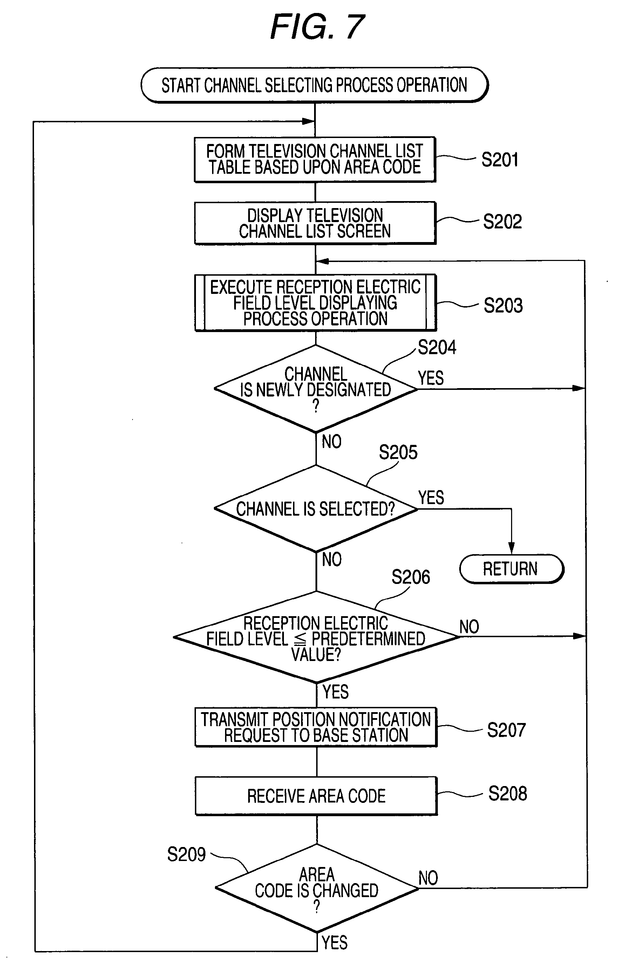

Since the television broadcast has not yet been received (S104; NO and S105; NO), if the user selects a channel which is wanted to be received in a channel selecting process operation (S106), then the television broadcast receiving unit 7 receives the television broadcast which is tuned to the selected channel, and measures a reception electric field strength of the received television broadcast. As shown in Fig. 4, the display unit 8 displays a reception electric field level 43 based upon the reception electric field strength of the received television broadcast (S107), and displays television broadcast 42 on the display unit 41, and also the sound output unit 9 outputs sound (S108). A detailed explanation as to the process operation of S106 will be made with reference to Fig. 7. A detailed explanation as to the process operation of S107 will be made with reference to Fig .8.

When the user ceases to receive the television broadcast under display from the status of S108 and switches the present channel to another channel (S109; YES), the process operation is returned to S107 in which the television broadcast receiving unit 7 again receives television broadcast which is tuned to the switched channel, and measures a reception electric field strength of the newly received television broadcast. The display unit 8 displays a reception electric field level 43 based upon the reception electric field strength of the newly received television broadcast (S107), and displays the newly received television broadcast 42 on the display unit 41, and also, the sound output unit 9 outputs sound (S108).

When the user switches to the television channel list screen 31 shown in Fig. 3 (S119; YES) from the status of S108 without switching to another channel (S109; NO), the process operation is returned to S106 in which the process operation waits that the user selects a next channel by executing a channel selecting process operation (S106).

When the reception electric field level of the television displayed in S107 exceeds a predetermined value (S111; NO), the process operation is returned to S107 in which the process operation for again measuring a reception electric field strength of the channel under display so as to output the reception electric level 43 of the television (S107).

When the reception electric field level of the television displayed in S107 becomes lower than, or equal to the predetermined value (S111; YES), since there are some possibilities that the position of the portable telephone 1 has been largely moved, the process operation is returned to S102. In this S102, a position notification request is again transmitted from the wireless communication unit 5 with respect to the base station (S102) so as to again receive an area code from the base station (S103).

When the previously received area code is identical to the newly received area code and there is no change (S104; YES), it is so assumed that the reception electric field level of the television is temporally lowered, and then, the process operation is advanced to an S107. In this S107, a display of the reception electric field level 43 of the channel under reception is carried out (S107), and the television program under reception is continued to be received (S108).

In the S104, even in such a case that the previously received area code is different from the newly received area code while the broadcast is being received (S104; NO), a channel 22 registered in the newly received area code 21 is retrieved from the television channel register table 11. If the channel under reception has been registered in the television channel register table 11 (S105; YES), then the process operation is advanced to the S107. On the other hand, if the channel under reception has not been registered (S105; NO), then the same television broadcast cannot be continuously received. As a result, the channel selecting process operation is again carried out in order that the user ceases to receive the television program under reception and can select such a channel which is wanted to be received from the channels registered in the new area code 21 (S106).

The process operations of Fig. 6 are ended when the power supply of the portable telephone 1 is turned OFF, or when the reception of the television program is ceased.

Next, the channel selecting process operation of S106 will now be described in detail. Fig. 7 is a flow chart for explaining process operations of channel selecting operation by the portable telephone according to the first embodiment of the present invention. The area code 21 of the television channel register table 11 of Fig. 2 is retrieved so as to acquire a receivable channel 22 which has been registered in the same area code 21 as the area code received in the S103 of Fig. 6, and the television channel list table 33 shown in Fig. 3 is formed (S201), and then the formed television channel list screen 31 is displayed (S202).

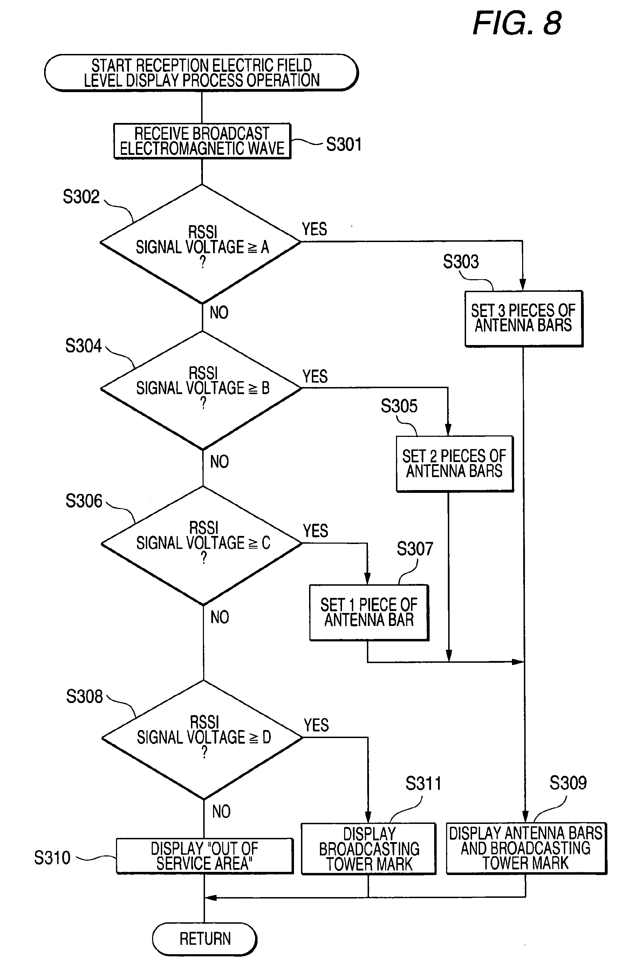

Since the uppermost channel is firstly designated by symbol "●" on the television channel list screen 31, a reception electric field strength as to the channel designated by symbol "●" is measured, and a reception electric field level based upon the measured reception electric field strength is displayed on the television channel list screen 31 (S203). A process operation of this S203 will be explained in Fig. 8.

When the user moves symbol "●" on the television channel list screen 31 so as to designate another channel (S204; YES), the process operation is returned to the S203 in which the television broadcast receiving unit 7 againmeasures a reception electric field strength of another channel, and again displays a reception electric field level based upon the re-measured reception electric field strength on the television channel list screen 31 (S203).

When a channel to be received is selected on the television channel list screen 31 (S205; YES), the process operation is returned to S107 of Fig. 6, in which television broadcast which is broadcasted in the selected channel is received.

If the reception electric field level displayed in the S203 exceeds a predetermined value (S206; NO), then the process operation is again returned to the S203. In this S203, such a process operation is carried out that a reception electric field strength of the channel designated by symbol "●" is again measured so as to again output a reception electric field level 34 of the television channel list screen 31 (S203). While the process operation waits for an operation from the input unit 3, the process operations defined from the S203 to the S206 are repeatedly carried out.

When the reception electric field level displayed in S203 becomes lower than, or equal to the predetermined value (S206; YES), a position notification request is again transmitted from the wireless communication unit 5 with respect to the base station (S207) so as to again receive an area code from the base station (S208). When the previously received area code is identical to the newly received area code and there is not changed (S209; NO), the process operation is returned to the S203 in which such a process operation is carried out that a reception electric field strength of the channel designated by symbol "●" is againmeasured so as to again output the reception electric field level 34 of the television channel list screen 31 (S203).

In the S209, if the previously received area code is different from the newly received area code and the area code is changed (S209; YES), the process operation is returned to the S201 in which the area code 21 of the television channel register table 11 of Fig. 2 is retrieved so as to require a receivable channel 22 registered in the same area code 21 as the newly received area code, and a television channel list screen 31 is newly formed (S201), and this new television list screen 31 is displayed (S202).

A description is made of reception electric field level displaying process operations of the S107 and the S203. Fig. 8 is a flow chart for describingprocess operations of displaying reception electric field levels in the portable telephone of the first embodiment of the present invention. The television broadcast receiving unit 7 of Fig. 1 is tuned to the designated channel so as to receive television broadcast electromagnetic waves, and measures a voltage of a reception electric field strength signal (will be referred to as "RSSI signal" hereinafter) indicative of an electric field strength of the receivedelectromagneticwaves (S301). Whenameasuredvoltage is higher than, or equal to "A" (S302; YES), as represented in Fig. 5, it is so set that 3 pieces of the antenna bars 53 are displayed (S303). When a measured voltage is lower than "A" and higher than, or equal to "B" (S304; YES), it is so set that 2 pieces of the antenna bar 53 are displayed (S305). When a measured voltage is lower than "B" and higher than, or equal to "C" (S306; YES), it is so set that 1 piece of the antenna bar 53 is displayed (S307). Then, a broadcasting tower mark 52 is displayed in combination with the antenna bars 53 which are set in the S303, the S305, or the S307 (S309). In such a case that a voltage of an RSSI signal is lower than "C" and higher than, or equal to "D" (S308; YES), it is so set that no antenna bar is displayed, and the broadcasting tower mark 52 is displayed (S311). When a voltage of an RSSI signal is lower than "D" (S308; NO), "out of service area" is displayed (S310). A large/small relationship among A, B, C, D is given as A>B>C>D.

In accordance with the portable telephone of the first embodiment of the present invention, since the electric field strengths of the received television broadcast electromagnetic waves are displayed, the user of the portable telephone can simply confirm the reception condition of the television channel receivable at the present place.

It should be noted that although the channel selecting process operation of Fig. 7 executed in the portable telephone of the first embodiment of the present invention displays the television channel list screen 31 so as to select the channel, the channel selecting process operation is not limited only to the method for selecting the channel from the television channel list screen 31. Alternatively, the receivable channels may be allocated to the ten-numeral keys and the various sorts of function keys of the input unit 3, and then, the channel may be selected by depressing the key.

Also, in the portable telephone of the first embodiment of the present invention, the television channel register table is retrieved based upon the positional information so as to acquire the receivable channel. Alternatively, the television channel register table 11 may be retrieved based upon such a positional information acquired by GPS (Global Positioning System) in order to acquire the receivable channel.

Also, in the portable telephone of the first embodiment of the present invention, a reception electric field level of a wireless communication may be alternatively displayed on the television channel list screen of Fig. 3.

### (SECOND EMBODIMENT)

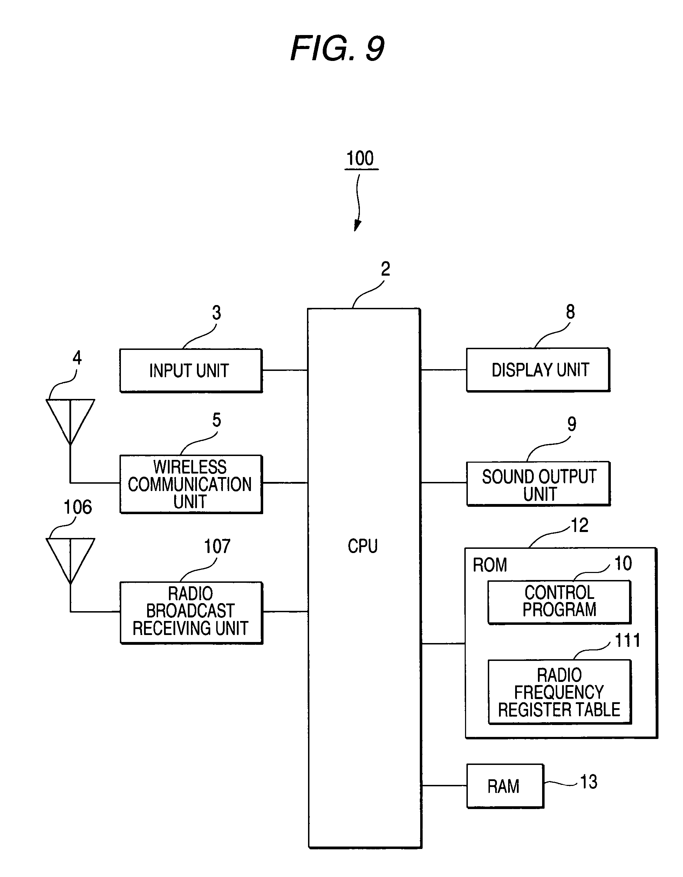

A portable telephone according to a second embodiment of the present invention will now be described in detail with reference to Fig. 9 to Fig. 13. The same reference numerals will be employed as those for denoting portions which have already been explained in the first embodiment, and therefore, explanations thereof are omitted.

Fig. 9 is a block diagram for indicating an arrangement of a portable telephone according to the second embodiment of the present invention. The portable telephone 100 is arranged by containing a radio broadcast receiving unit 107 and a ROM 12. The radio broadcast receiving unit 107 receives a radio broadcast via a radio antenna 106 from a radio broadcasting tower. The ROM 12 stores thereinto a radio frequency register table 111.

The CPU 2 executes such a process operation that a radio broadcast is received in response to an operation from the input unit 3 so as to display a reception electric field level of the radio broadcast.

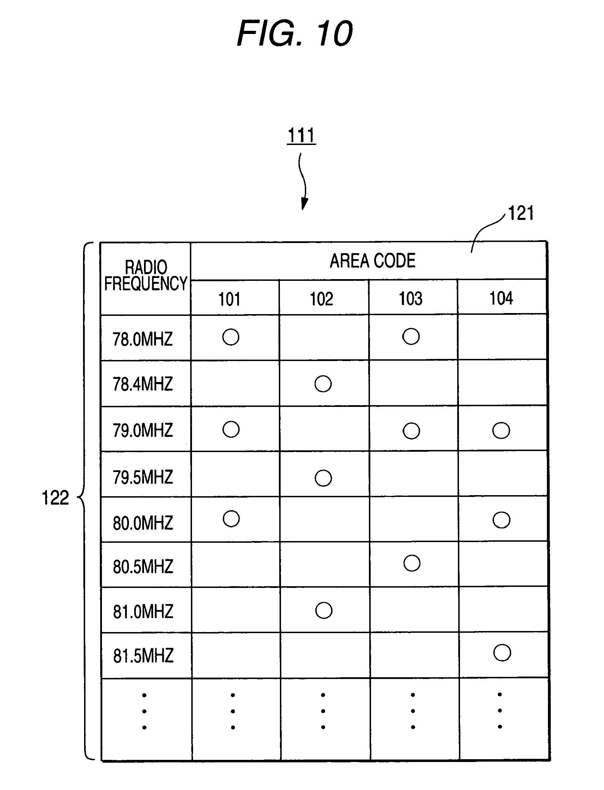

Fig. 10 represents an example as to a radio frequency register table of the second embodiment of the present invention. As shown in Fig. 10, a radio frequency register table 111 has registered frequencies 122 which are receivable for every area code 121 by applying signs, for example, "o." In an area code "101", for instance, the receivable frequencies 122 of "78.0 MHz", "79.0MHz", and" "80.0 MHz" have been registered by applying the signs "○." However, other frequencies 122 which cannot be received in the area code "101" are not registered, since these frequencies 122 have no sign "○." An area code 121 indicates positional information as to a present place of the portable telephone 100, which is received from a base station to which the portable telephone 100 is communicated in a wireless manner. A radio frequency list screen corresponding to the area code 121 is formed from the radio frequency register table 111 so as to be displayed on the display unit 8.

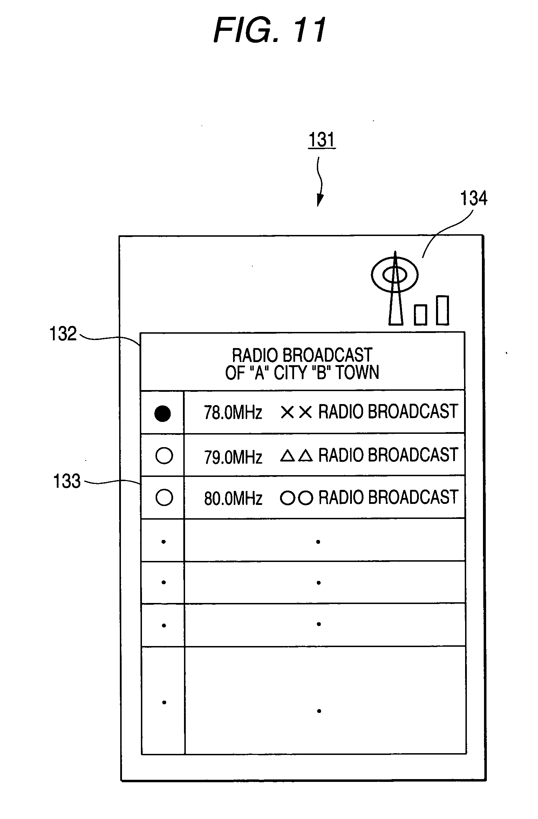

Fig. 11 indicates an example of the radio frequency list screen of the second embodiment of the present invention. As shown in Fig. 11, a present place 132, a radio frequency list table 133 receivable at the present places 132, and a reception electric field level 134 of a radio broadcast are displayed on the radio frequency list screen 131 which is displayed on the display unit 8. In the radio frequency list table 133, a reception electric field strength of a frequency which is designated by for example symbol "●" is displayed in the reception electric field level 134 of the radio broadcast. Sound of a radio program which is broadcasted at a frequency selected in the radio frequency list table 133 is outputted from the sound output unit 9.

Although the display unit 8 may display any one of screens during radio broadcasting operation, for example, a reception electric field level of a radio broadcast is outputted such as the reception electric field level 43 of the television broadcast shown in Fig. 4 of the first embodiment. At this time, as shown in Fig. 4(a), both a reception electric field level of a radio broadcast and a reception electric field level of a wireless communication may be displayed, and also, as represented in Fig. 4 (b), only a reception electric field level of a radio broadcast may be displayed. Also, a reception electric field level of a radio broadcast may be displayed by the broadcasting electromagnetic wave mark 51 of Fig. 5 so as to be distinguishable from an electromagnetic wave condition indication of a wireless communication.

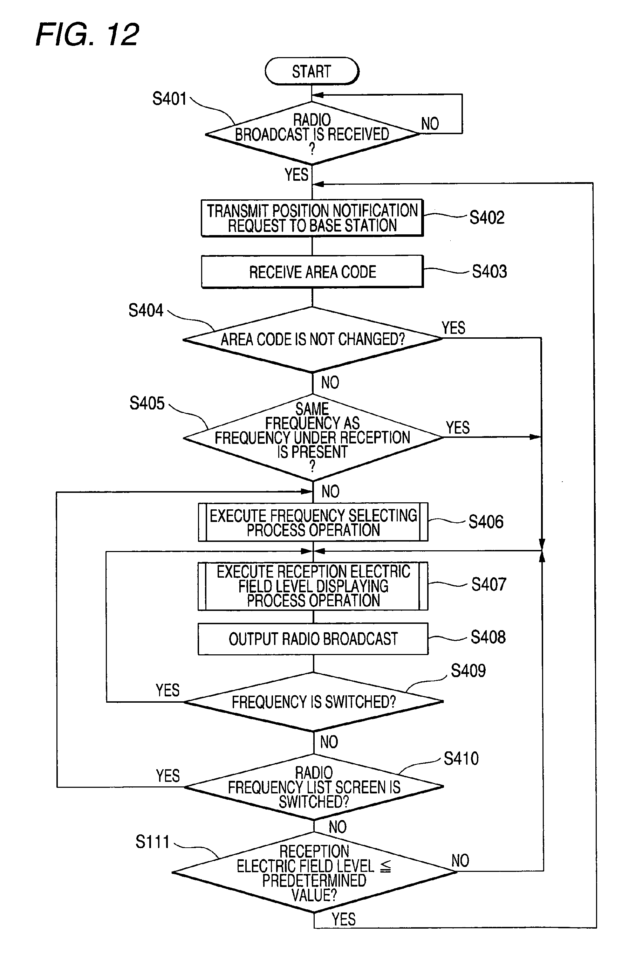

Fig. 12 is a flow chart for explaining process operations executed when a radio broadcast is received by the portable telephone according to the second embodiment of the present invention. It should be understood that process operations defined from 5201 to S104, and a process operation defined in S111 are executed by the same process operations of the process flow diagram when the television broadcast is received by the portable telephone of the first embodiment shown in Fig. 6. Since a radio broadcast has not yet been received (S404; NO and S405; NO), when the user selects a radio frequency in a frequency selecting process operation (S406), the radio broadcast receiving unit 107 receives a radio broadcast which is tuned to the selected frequency so as to measure a reception electric field strength of the received radio broadcast. The display unit 8 displays a reception electric field level based upon the reception electric field strength of the received radio broadcast (S407), and the sound output unit 9 outputs the radio broadcast (S408).

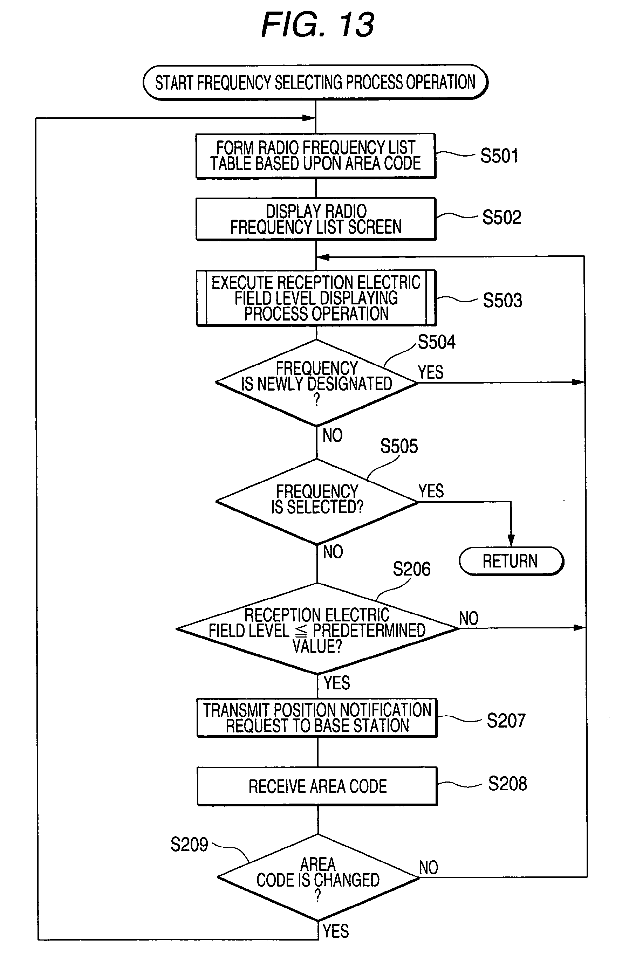

A detailed content as to the process operation of S406 will be described later with reference to Fig. 13.

When the user ceases to hear the radio broadcast under reception and switches to another frequency from the status of S408 (S409; YES), the process operation is returned to S407. In this S407, the radio broadcast receiving unit 107 again receives a radio broadcast which is tuned to the switched frequency 122 so as to measure a reception electric field strength of the newly received radio broadcast.

When the user switches to the radio frequency list screen 131 of Fig. 11 (S410; YES) from the status of S408 without switching to another frequency while the user listens to the radio program (S409; NO), the process operation is returned to the S406 in which the process operation wait that the user selects a radio frequency which is wanted to be heard by the user by the frequency selecting process operation (S406).

Next, the frequency selecting process operation of S406 will now be described in detail. Fig. 13 is a flow chart for explaining process operations of frequency selecting operation by the portable telephone according to the second embodiment of the present invention. The area code 121 of the radio frequency register table 111 of Fig. 10 is retrieved so as to acquire a receivable frequency 122 which has been registered in the same area code 121 as the area code received in the S403 of Fig. 12, and the radio frequency list table 133 shown in Fig. 11 is formed (S501), and then the formed radio frequency list screen 131 is displayed (S502).

Since the uppermost frequency is firstly designated by symbol "●" on the radio frequency list screen 131, a reception electric field strength as to the frequency designated by symbol "●" is measured, and a reception electric field level based upon the measured reception electric field strength is displayed on the radio frequency list screen 131 (S503).

When the user moves symbol "●" on the radio frequency list screen 131 so as to designate another frequency (S504; YES), the process operation is returned to the S503 in which the radio broadcast receiving unit 107 againmeasures a reception electric field strength of another frequency 122, and again displays a reception electric field level based upon the re-measured reception electric field strength on the radio frequency list screen 131 (S503).

When a frequency of a radio broadcast which is wanted to be received is selected on the radio frequency list screen 131 (S505; YES), the process operation is returned to S407 of Fig. 12, in which the radio broadcast having the selected frequency is received.

In the reception electric field level displaying process operations of S407 and S503, a similar process operation to that of Fig. 8 is carried out by employing an electric field strength which is detected by an electric field strength detecting circuit (not shown) provided in the radio broadcast receiving unit 107, and then, a reception electric field level of the radio broadcast is displayed on the display unit 8.

In accordance with the portable telephone of the second embodiment of the present invention, since the electric field strength of the received radio broadcast is displayed, the user of the portable telephone can simply confirm the reception conditions of the radio broadcast receivable at the present place.

It should also be noted that the portable telephone equipped with the television broadcast receiving function has been explained in the first embodiment of the present invention, whereas the portable telephone equipped with the radio broadcast receiving function has been described in the second embodiment of the present invention. Alternatively, the present invention maybe applied to such a portable terminal apparatus as a portable telephone equipped with both the television broadcast receiving function and the radio broadcast receiving function.

While the present invention has been described in detail, or with reference to the specific embodiments, it is obvious for the ordinarily skilled engineers to modify, or change the present invention in various ways without departing from the technical scope and spirit of the present invention.

The present patent application has been made based upon Japanese patent application (Application No.2004-253941) filed on September 1, 2004, the contents of which are incorporated herein.

### <Industrial Applicability>

The portable terminal apparatus of the present invention owns such an effect that the reception conditions of the broadcast electromagnetic waves distributed from the broadcasting stations can be quantitatively and easily confirmed, and is useful for a portable terminal apparatus having either a television broadcast receiving function or a radio broadcast receiving function.

## Claims

1. A portable terminal apparatus capable of receiving broadcast, comprising:
broadcast receiving means for receiving a broadcast electromagnetic wave transmitted from a broadcasting station;
electric field strength detecting means for detecting an electric field strength of an electromagnetic wave; and
display means for displaying information; wherein:
said electric field strength detecting means detects an electric field strength of said broadcast electromagnetic wave; and
said display means displays said detected electric field strength of the broadcast electromagnetic wave.

2. The portable terminal apparatus as claimed in claim 1 wherein:
said portable terminal apparatus is comprised of: positional information acquiring means for acquiring positional information of said portable terminal apparatus: and
channel specifying means for specifying a channel of a broadcasting station which can be received by said portable terminal apparatus with reference to said acquired positional information; and wherein:
said broadcast receiving means receives a broadcast electromagnetic wave of the specified channel of said broadcasting station.

3. The portable terminal apparatus as claimed in claim 2 wherein:
said display means displays both said acquired positional information and the electric field strength of the broadcast electromagnetic wave detected for every channel of the specified broadcasting station at the same time.

4. The portable terminal apparatus as claimed in any one of claim 1 to claim 3 wherein:
said display means displays the electric field strength of said detected broadcast electromagnetic wave in a multiple stage.

5. The portable terminal apparatus as claimed in claim 4 wherein:
said display means displays that when said broadcast electromagnetic wave is detected, the detected area is a service area of the broadcast.

6. The portable terminal apparatus as claimed in any one of claim 1 to claim 5, further comprising:
wireless communicating means for communicating in a wireless manner.

7. The portable terminal apparatus as claimed in claim 6
wherein: said display means commonly uses an electric field strength indication of said broadcast electromagnetic wave, and an electric field strength indication of said wireless communicating means.

8. The portable terminal apparatus as claimed in claim 6, or claim 7 wherein:
said positional information acquiring means acquires said positional information from a base station of said portable terminal apparatus by said wireless communicating means.

9. The portable terminal apparatus as claimed in any one of claim 1 to claim 8 wherein:
said broadcast receiving means receives at least a television broadcasting electromagnetic wave, or a radio broadcasting electromagnetic wave.

## Amended claims

### Amended claims under Art. 19.1 PCT

1. (Deleted)

2. (Deleted)

3. (Amended)
A portable terminal apparatus capable of receiving broadcast, comprising:
broadcast receiving means for receiving a broadcast electromagnetic wave transmitted from a broadcasting station;
electric field strength detecting means for detecting an electric field strength of an electromagnetic wave; and
display means for displaying information;
positional information acquiring means for acquiring positional information of said portable terminal apparatus:
channel specifying means for specifying a channel of a broadcasting station which can be received by said portable terminal apparatus with reference to said acquired positional information;
wherein said display means displays both said acquired positional information and the electric field strength of the broadcast electromagnetic wave detected for every channel of the specified broadcasting station at the same time.

4. (Deleted)

5. (Deleted)

6. (Deleted)

7. (Amended)
A portable terminal apparatus capable of receiving broadcast, comprising:
broadcast receiving means for receiving a broadcast electromagnetic wave transmitted from a broadcasting station;
wireless communicating means for communicating in a wireless manner;
receiving means for receiving a base station electromagnetic wave transmitted from a base station;
electric field strength detecting means for detecting an electric field strength of an electromagnetic wave; and
display means for displaying information;
wherein said display means commonly uses an electric field strength indication of said broadcast electromagnetic wave, and an electric field strength indication of said wireless communicating means.

8. (Deleted)

9. (Deleted)

10. (Added)
A portable terminal apparatus capable of receiving broadcast, comprising:
broadcast receiving means for receiving a broadcast electromagnetic wave transmitted from a broadcasting station;
electric field strength detecting means for detecting an electric field strength of an electromagnetic wave; and
display means for displaying information;
positional information acquiring means for acquiring positional information of said portable terminal apparatus:
channel specifying means for specifying a channel of a broadcasting station which can be received by said portable terminal apparatus with reference to said acquired positional information;
wherein said display means displays both said acquired positional information and a channel list of the specified broadcasting station at the same time.
